# EUROPEAN PATENT SPECIFICATION

(11) **EP 2 292 408 B1**
(45) Date of publication and mention of the grant of the patent: **10.12.2014**
(21) Application number: 10169522.9
(22) Date of filing: 14.07.2010
(51) Int. Cl.: B29C 51/10, B32B 27/04, B32B 27/06, E04B 7/10, E04C 2/24, E04C 2/54, E04D 13/03, B32B 37/10, B29C 51/14, B29C 51/00, B29C 51/42, B29L 24/00, B29L 31/00, B29K 23/00, B29K 33/00, B29K 67/00, B29K 69/00, B29K 63/00

(54) **Insulating light transmitting element, method for manufacturing the same, and dome comprising such an element**
Isolierendes lichtdurchlässiges Bauteil, Verfahren für dessen Herstellung, und eine solches Bauteil umfassende Kuppel
Elément isolant translucide, procédé pour sa fabrication et coupole comprenant un tel élément

(30) Priority: 17.07.2009 BE 200900444
(43) Date of publication of application: 09.03.2011
(73) Proprietor: Glorieux, Rik, 8530 Harelbeke (BE)
(72) Inventor: Glorieux, Rik, 8530 Harelbeke (BE)
(74) Representative: D'Halleweyn, Nele Veerle Trees Gertrudis

(56) References cited:
- DE-A1- 19 702 239
- DE-A1- 19 954 955
- FR-A3- 2 698 901
- NL-A- 7 413 109
- US-A1- 2006 125 158
- WILSCHUT J: "WEL LICHT MAAR GEEN WARMTE DOOR NIEUW TYPE PLEXIGLAS", BOUWWERELD, REED BUSINESS INFORMATION, DOETINCHEM, NL, vol. 90, no. 18, 2 September 1994 (1994-09-02), page 50/51, XP000487960, ISSN: 0026-5942
- -: "Nanogel, profil d'application", Cabot Corp. , 30 September 2006 (2006-09-30), XP002562550, Retrieved from the Internet: URL:http://www.alcaud.fr/PDF/magasin_carre four.pdf [retrieved on 2010-01-11]
- H. Lagier: "Avis Technique 6/06-1699, Nanogel PC", CSTB , 16 July 2007 (2007-07-16), XP002562551, Retrieved from the Internet: URL:http://www.alcaud.fr/PDF/avis_techniqu e_nanogel.pdf
- K. Morcant: "Avis Technique 2/05-1139, Monaco CTS Titan 1200", CSTB , 2 November 2005 (2005-11-02), XP002562552, Retrieved from the Internet: URL:http://www.alcaud.fr/PDF/avis_techniqu e_voute_monaco.pdf

## Description

The present invention relates to a method for manufacturing an insulating light-transmitting element according to the preamble of claim 1, and to an insulating light-transmitting element directly obtained by such a method, in particular to a super-insulating improved dome skylight.

Filling flat multi-walled plastic plates with an insulating material, such as an insulating aerogel with pores of nano-dimensions, is generally known. Such an aerogel is for instance manufactured by Cabot Corporation and marketed under the brand name Nanogel. These filled plates can however only be used in the form of flat light-transmitting plates.

DE 199 54 955 discloses a multi-walled plastic plate comprising a number of channels in which a transparent material is arranged.

FR 2 698 901 discloses a method for manufacturing a dome using thermal forming.

"Nanogel, profil d'application" Cabot Corp. 30 September 2006 (http://www.alcaud.fr/PDF/magasin_carrefour.pdf discloses a multi-walled polycarbonate profiled filled with nanogel aerogel.

The present invention has for its object to provide a light-transmitting element of a determined form, while maintaining good insulating properties.

The invention provides for this purpose a method which is distinguished by the features of the characterizing portion of claim 1. Claims 2-8 describe advantageous embodiment variants of this method.

According to an embodiment of the method according to the invention, an assembly is selected with a flat thermoformable light-transmitting upper and lower wall of plastic and an insulating light-transmitting filler material arranged therebetween, particularly a silica aerogel with pores of nano-dimensions. The assembly can more particularly consist of two or more solid plastic plates between which the aerogel is arranged, or of a multi-walled plastic plate with a series of channels in which the aerogel is arranged. Such a multi-walled plate is for instance manufactured by extrusion, wherein the channels or chambers of the multi-walled extruded plastic plate are for instance elongate prismatic chambers extending over the length of the plate. Depending on the desired strength and dimensions, the plate will comprise more or fewer chambers or channels with modified dimensions. The plastic material used in the assembly, i.e. the plastic material from which for instance the multi-walled plate is manufactured or from which the solid plates are manufactured, is a thermoformable plastic material. Suitable materials are for instance: polycarbonate, polypropylene, acrylate, polyethylene, polyethylene terephthalate (PET), PVC, etc., or a combination thereof.

In a subsequent step of the method according to the invention this assembly is given the desired shape by thermoforming. The thermoforming of the assembly typically consists of heating thereof and subsequent deforming thereof making use of pressure differences. The deforming of the assembly preferably consists of bringing a space adjacent to the upper wall of the assembly to a first pressure, while the space adjacent to the lower wall is held at a second, higher pressure.

Note that the upper wall is typically understood to mean the wall which forms the outer side of the formed light-transmitting element, particularly the dome skylight element. This upper wall is however typically directed downward during the thermoforming process, as is known to the skilled person.

The insulating light-transmitting filler material is typically a silica aerogel material with pores of nano-dimensions, and for instance the material Nanogel marketed by the Cabot company, or any other equivalent insulating product which is light-transmitting and weighs little. Such material has the advantage that the insulating value of the product is increased considerably. More generally, the material typically has properties which are not affected by the thermoforming process.

According to a possible embodiment the assembly is heated by placing an upper and/or lower heating plate in the vicinity of respectively the upper and lower wall of the assembly. These heating plates are for instance ceramic heating plates, wherein the heating takes place for instance by infrared radiation. When an insulating light aerogel is arranged between upper and lower wall it will not usually suffice to heat along one side, and according to the present invention heating preferably takes place along both the upper and lower sides, although the skilled person will appreciate that it is also possible to heat only the upper side or only the lower side depending on the dimensions, the materials used, etc.

According to a preferred embodiment, the insulating aerogel is arranged in the channels of the multi-walled plastic plate, and pressure differences are applied over the assembly such that the volume of the channels is increased during the thermoforming. The space adjacent to the outside of the element to be formed is here preferably brought to a lower pressure than the inside such that the outer walls of the channels adjacent to the upper wall of the multi-walled plastic plate are pressed outward. The channels are thus as it were opened more such that the thermal performance of the element is improved.

According to a possible embodiment, the aerogel is arranged loosely in the multi-walled plate and sealed at the edges with tape, or the aerogel is fixed in other manner in the plate, and the edges are sealed during or after the thermoforming, for instance making use of a die to fuse the edges. After this sealing the tape can of course be removed.

According to an embodiment, the light-transmitting element, in particular a dome skylight element, comprises a convex, particularly a dish-like, thermoformed light-transmitting upper and lower wall of plastic and an insulating silica aerogel with pores of nano-dimensions arranged therebetween. The insulating filler material, typically an aerogel, can thus also be arranged between two already thermoformed dishes (an inner and outer dish), wherein the filler material is for instance pressed open like a jelly by moving the inner and outer dishes toward each other.

The super-insulating light-transmitting element is used for instance as intermediate wall or outer wall of a normal dome skylight and thus improves the thermal performance of the dome skylight. Note that the aerogel can also be arranged between two solid plates or between two multi-walled plates, wherein the thus formed assembly is typically thermoformed in one operation.

The invention will now be further elucidated on the basis of a number of non-limitative exemplary embodiments, with reference to the accompanying figures, in which:
Figures 1A-1C illustrate schematically an embodiment of the method according to the invention;
Figure 2 shows a cross-section along II-II in figure 1C;
Figure 3 shows schematically the sealing of a side of a multi-walled plastic plate, and figure 3A shows a sealed side;
Figures 4, 5, 6A and 6B illustrate four variants of an embodiment of a dome skylight; and
Figure 7 shows a schematic perspective view of yet another variant of a light-transmitting roof element.

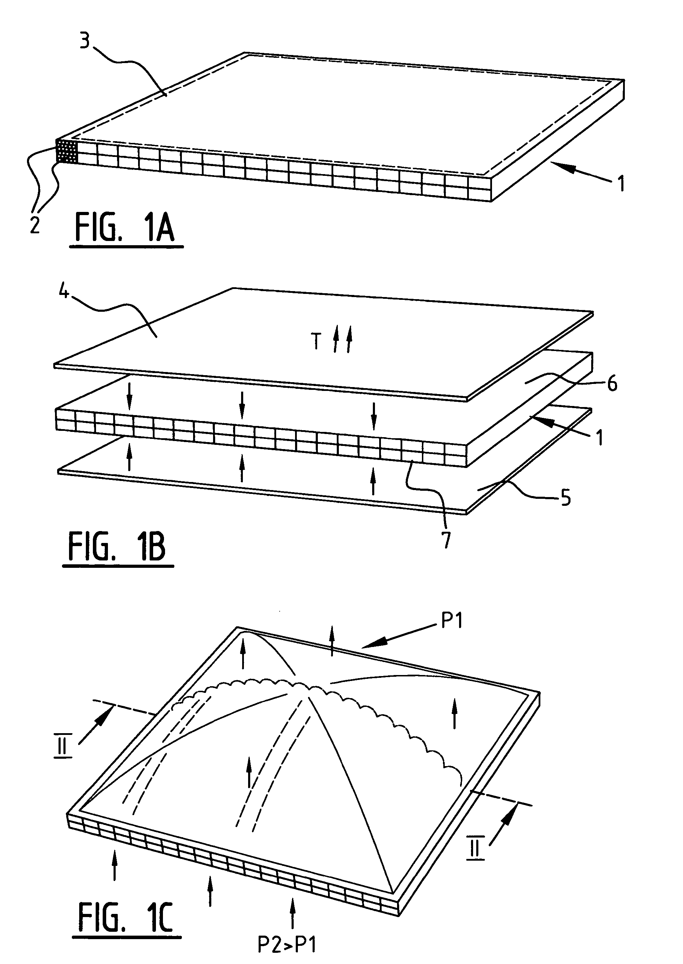

The variant of figure 1 is based on a multi-walled plastic plate 1, the channels 2 of which are filled with a nanogel. In the shown embodiment the multi-walled plastic plate has two rows of channels lying one above the other. According to a variant, the multi-walled plate has one row of channels or more than two rows of channels.

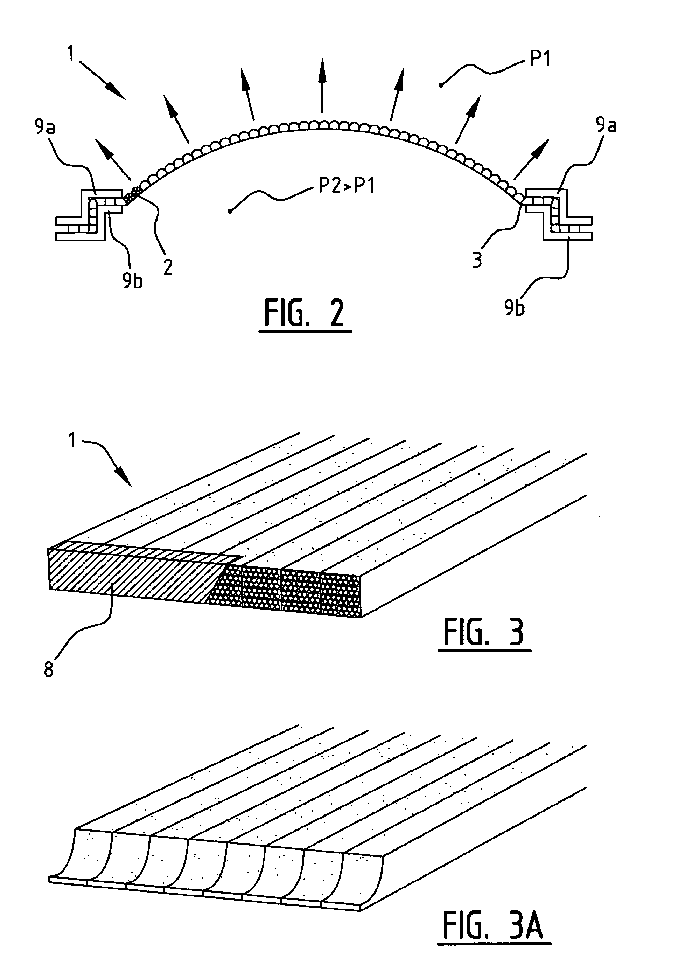

Multi-walled channel plate 1 is clamped along its edge 3, typically making use of an upper and lower die. These upper and lower dies can be heated and, where necessary, moved toward each other in order to seal the channel plate at its edge 3, see figure 3A.

The upper wall and lower wall of plate 1 are then heated, as illustrated schematically in figure 2B. An upper heating plate 4 is here placed in the vicinity of upper wall 6 of plate 1, while a lower heating plate 5 is placed in the vicinity of lower wall 7 of plate 1. Upper wall 6 will typically be heated more than lower wall 7. The temperatures at which the work can take place can for instance vary between 100 and 400°C, depending on the desired dimensions and thickness of the plate. The temperature applied can further vary between the centre and the edges of the plate.

After heating multi-walled plastic plate 1 the space adjacent to upper wall 6 is brought to a lower pressure P1 (a vacuum is for instance applied), while the space adjacent to lower wall 7 is under a higher pressure P2, for instance atmospheric pressure. According to an alternative, it is possible to blow against lower wall 7 from below.

Note that this method is typically performed with the lower wall directed downward, i.e. upside down compared to the schematic outlines of figures 1A-C. As best illustrated in figure 2, the lower pressure P1 ensures that the multi-walled plate deforms thermally, wherein the volume of the channels increases and the channels more particularly have a convex shape on the outside. The thermoforming preferably takes place freely, i.e. without the use of additional moulds.

Figure 2 further illustrates an upper and lower die 9a, 9b with a stepped cross-section for imparting a stepped form to the peripheral edge of the light-transmitting element to be formed.

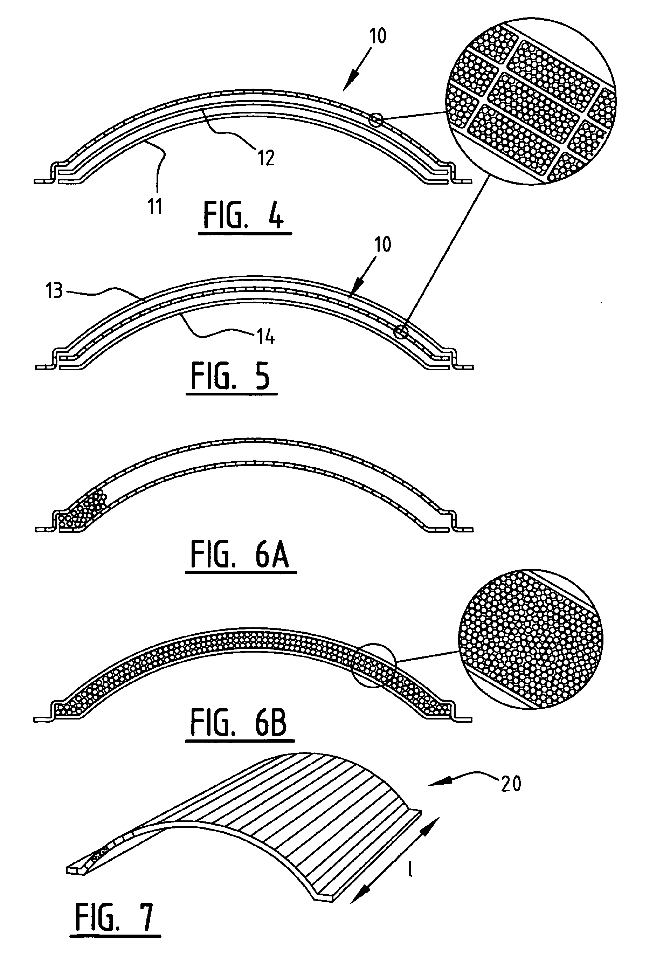

Although the method is illustrated on the basis of the multi-walled plastic plate, the skilled person will appreciate that the operation can take place in similar manner making use of two solid plastic plates between which an aerogel is arranged. The result of such a variant is illustrated in figure 6A. According to yet another variant, the nanogel is arranged between two multi-walled plates (see figure 6B) or between a solid plastic plate and a multi-walled plastic plate (not shown In order to prevent the possibility of leakage of the aerogel out of the multi-walled plastic plate, use is typically made of an adhesive tape 8. Before, during or after the thermoforming the edges of the multi-walled plate can be sealed and tape 8 can be removed, as illustrated in figure 3A.

Figures 4 and 5 illustrate two variants of a dome skylight, in which a thermoformed light-transmitting roof element 10 is used in a dome skylight. In the variant of figure 4 the super-insulating element 10 is combined with two solid plastic plates 11, 12. According to the variant of figure 5 a super-insulating element 10 is enclosed by two plastic plates 13, 14.

A dome skylight can for instance be used as fixed roof element or as opening roof element for ventilating or allowing the escape of smoke from a building or space.

Finally, figure 7 shows another possible light-transmitting roof element which can be manufactured using the method according to the invention. Roof element 20 is here not intended for a dome skylight, but can for instance be used for a barrel vault skylight. Roof element 20 has a substantially constant cross-section along its length l. The skilled person will appreciate that other shapes can also be envisaged without departing from the scope of the invention, wherein use can be made of moulds if desired in order to obtain a specific shape. Roof element 20 can of course also be combined with solid and/or multi-walled plastic plates of a similar form in the same manner as illustrated in figures 4 and 5 for a dome skylight. The cross-sections of figures 6A and 6B are also possible for roof element 20.

## Claims

1. Method for manufacturing a light-transmitting element, comprising the following steps of:
- selecting an assembly (1) comprising a lower and an upper flat thermoformable light-transmitting plastic wall (6, 7) and a thermally insulating light-transmitting filler material (2) arranged therebetween, **characterized by**
- thermoforming the assembly in order to obtain a light-transmitting element of a determined shape, wherein the thermoforming of the assembly consists of heating the assembly and subsequent deforming thereof making use of pressure differences (P1, P2), and wherein the deforming of the assembly consists of bringing a space adjacent to the upper wall of the assembly to a first pressure, while the space adjacent to the lower wall is held at a second, higher pressure.

2. Method as claimed in any of the foregoing claims, wherein the upper wall is heated more than the lower wall.

3. Method as claimed in any of the foregoing claims, wherein the heating consists of arranging an upper and lower heating plate in the vicinity of respectively the upper and lower wall of the assembly, wherein the heating plates are preferably ceramic heating plates, and the heating preferably takes place by infrared radiation.

4. Method as claimed in any of the foregoing claims, wherein the assembly consists of a multi-walled plastic plate with channels in which the insulating light-transmitting filler material is arranged.

5. Method as claimed in claim 6, wherein the assembly is heated and pressure differences are applied over the assembly such that the volume of the channels is increased during the thermoforming.

6. Method as claimed in any of the foregoing claims, wherein prior to the thermoforming the assembly is clamped fixedly along at least a part of its periphery.

7. Method as claimed in any of the foregoing claims, wherein the edges of the assembly are sealed such that the aerogel is received in sealed manner in the thermoformed light-transmitting element.

8. Method as claimed in any of the foregoing claims for manufacturing a dome skylight, wherein
- a multi-walled plastic plate with an upper wall and a lower wall, and filled therebetween with a thermally insulating light-transmitting filler material, typically a silica aerogel with pores of nano-dimensions, is clamped fixedly along substantially its whole periphery;
- the upper and lower wall of the multi-walled plastic plate are heated; and
- a space adjacent to the upper wall is brought to a first pressure, while the space adjacent to the lower wall is held at a higher second pressure such that the plate is freely thermoformed for the purpose of obtaining a dish-like dome skylight.

9. Method as claimed in any one of the claims 1-8, wherein the filler material is an insulating silica aerogel with pores of nanodimensions.

10. Method as claimed in any one of the claims 1-8, wherein the thermoformable plastic is one of the following:
polycarbonate, polyethylene, polypropylene, acrylate, polyethylene terephthalate (PET), or any other thermoplastic.

## Patentansprüche

1. Verfahren zum Herstellen eines lichtdurchlässigen Elements, aufweisend die folgenden Schritte:
- Auswählen einer Anordnung (1), welche eine obere und eine untere thermoformbare lichtdurchlässige Plastikwand (6, 7) und ein dazwischen angeordnetes thermisch isolierendes lichtdurchlässiges Füllmaterial (2) aufweist, **dadurch gekennzeichnet, dass**
die Anordnung thermogeformt wird, um ein lichtdurchlässiges Element einer bestimmten Gestalt zu erhalten, wobei das Thermoformen der Anordnung aus dem Aufheizen der Anordnung und darauffolgendem Deformieren von dieser, unter dem Einsatz von Druckdifferenzen (P1, P2), besteht, und wobei das Deformieren der Anordnung darin besteht, einen Raum, der an die oberen Wand der Anordnung angrenzt, auf einen ersten Druck zu bringen, während der an die untere Wand angrenzende Raum auf einem zweiten, höheren Druck gehalten wird.

2. Verfahren wie in einem der vorhergehenden Ansprüche beansprucht, wobei die obere Wand stärker geheizt wird als die untere Wand.

3. Verfahren wie in einem der vorhergehenden Ansprüche bean-sprucht, wobei das Heizen aus dem Anbringen einer oberen und einer unteren Heizplatte in der Nähe der entsprechenden oberen und unteren Wand der Anordnung besteht, wobei die Heizplatten bevorzugt keramische Heizplatten sind, und wobei das Heizen bevorzugt durch Infrarotstrahlung erfolgt.

4. Verfahren wie in einem der vorhergehenden Ansprüche beansprucht, wobei die Anordnung aus einer vielwandigen Plastikplatte mit Kanälen besteht, in welchen das isolierende lichtdurchlässige Füllmaterial angeordnet ist.

5. Verfahren wie in Anspruch 6 beansprucht, wobei die Anordnung geheizt wird und Druckdifferenzen über die Anordnung angelegt werden, so dass das Volumen der Kanäle während des Thermoformens erhöht wird.

6. Verfahren wie in einem der vorhergehenden Ansprüche beansprucht, wobei vorausgehend zu dem Thermoformen die Anordnung entlang wenigstens eines Teils ihres Umfangs fest eingespannt wird.

7. Verfahren wie in einem der vorhergehenden Ansprüche beansprucht, wobei die Kanten der Anordnung versiegelt werden, so dass das Aerogel in dem thermogeformten lichtdurchlässigen Elementen in einer versiegelten Art und Weise aufgenommen wird.

8. Verfahren wie in einem der vorhergehenden Ansprüche für die Herstellung einer Dachfensterkuppel beansprucht, wobei
- eine mehrwandige Plastikplatte mit einer oberen Wand und einer unteren Wand, und wobei diese dazwischen mit einem thermoisolierenden lichtdurchlässigen Füllmaterial, typischerweise einem Silica-Aerogel mit Poren in Nanogröße, gefüllt sind, im Wesentlichen entlang ihres gesamten Umfangs festgeklemmt wird;
- die obere und die untere Platte der mehrwandigen Plastikplatte geheizt werden; und
- ein Raum, der an die obere Platte angrenzt, auf einen ersten Druck gebracht wird, während der Raum, der an die untere Platte angrenzt, auf einem höheren zweiten Druck gehalten wird, so dass die Platte frei thermogeformt wird, zum Zwecke des Erhaltens einer schüsselähnlichen Dachfensterkuppel.

9. Verfahren wie in einem der Ansprüche 1 bis 8 beansprucht, wobei das Füllmaterial ein isolierendes Silica-Aerogel mit Poren in Nanogröße ist.

10. Verfahren wie in einem der Ansprüche 1 bis 8 beansprucht, wobei das thermoformbare Plastik eines der folgenden ist: Polycarbonat, Polyethylen, Polypropylen, Acrylat, Polyethylenterephthalat (PET), oder jedes andere Thermoplastik.

## Revendications

1. Procédé de fabrication d'un élément de transmission de lumière, comprenant les étapes suivantes de :
- sélection d'un ensemble (1) comprenant des parois en matière plastique transmettant la lumière, thermoformables plates inférieure et supérieure (6, 7) et un matériau de charge transmettant la lumière, thermiquement isolant (2) agencé entre les deux, **caractérisé par**
- le thermoformage de l'ensemble afin d'obtenir un élément de transmission de lumière d'une forme déterminée, dans lequel le thermoformage de l'ensemble consiste à chauffer l'ensemble et à déformer consécutivement celui-ci en utilisant des différences de pression (P1, P2), et dans lequel la déformation de l'ensemble consiste à placer un espace adjacent à la paroi supérieure de l'ensemble à une première pression, alors que l'espace adjacent à la paroi inférieure est maintenu à une seconde pression supérieure.

2. Procédé selon l'une quelconque des revendications précédentes, dans lequel la paroi supérieure est chauffée à une température supérieure à celle de la paroi inférieure.

3. Procédé selon l'une quelconque des revendications précédentes, dans lequel le chauffage consiste à agencer des plaques chauffantes supérieure et inférieure respectivement à proximité des parois supérieure et inférieure de l'ensemble, dans lequel les plaques chauffantes sont de préférence des plaques chauffantes en céramique, et le chauffage est de préférence assuré par rayonnement infrarouge.

4. Procédé selon l'une quelconque des revendications précédentes, dans lequel l'ensemble consiste en une plaque de matière plastique à plusieurs parois avec des canaux dans lesquels est agencé le matériau de charge isolant transmettant la lumière.

5. Procédé selon la revendication 6, dans lequel l'ensemble est chauffé et des différences de pression sont appliquées sur l'ensemble de telle sorte que le volume des canaux augmente au cours du thermoformage.

6. Procédé selon l'une quelconque des revendications précédentes, dans lequel, avant le thermoformage, l'ensemble est maintenu fermement le long d'au moins une partie de sa périphérie.

7. Procédé selon l'une quelconque des revendications précédentes, dans lequel les bords de l'ensemble sont scellés de telle sorte que l'aérogel est reçu de manière étanche dans l'élément de transmission de lumière thermo-formé.

8. Procédé selon l'une quelconque des revendications précédentes pour la fabrication d'un lanterneau, dans lequel
une plaque en matière plastique à plusieurs parois, avec une paroi supérieure et une paroi inférieure, et remplie entre ces dernières par un matériau de charge transmettant la lumière thermiquement isolant, classiquement un aérogel de silice avec des pores de dimensions nanométriques, est maintenue fermement sensiblement sur la totalité de sa périphérie ;
les parois supérieure et inférieure de la plaque en matière plastique à plusieurs parois sont chauffées ; et
un espace adjacent à la paroi supérieure est porté à une première pression, alors que l'espace adjacent à la paroi inférieure est maintenu à une seconde pression supérieure de telle sorte que la plaque est thermo-formée librement de manière à obtenir un lanterneau en forme de plat.

9. Procédé selon l'une quelconque des revendications 1 à 8, dans lequel le matériau de charge est un aérogel de silice isolant avec des pores de dimensions nanométriques.

10. Procédé selon l'une quelconque des revendications 1 à 8, dans lequel la matière plastique thermoformable est l'une des suivantes : du polycarbonate, du polyéthylène, du polypropylène, de l'acrylate, du polyéthylène téréphtalate (PET), ou tout autre matière thermoplastique.
